# EUROPEAN PATENT APPLICATION

(11) **EP 4 826 893 A1**
(43) Date of publication of application: **21.10.2026**
(21) Application number: 25848872.5
(22) Date of filing: 29.07.2025
(51) Int. Cl.: H01M 50/536, H01M 50/533, H01M 50/538, H01M 50/54, H01M 10/0585, H01M 10/0587, H01M 50/531

(54) **SECONDARY BATTERY AND MANUFACTURING METHOD THEREOF**

(30) Priority: 01.08.2024 KR 20240102243; 25.07.2025 KR 20250100962
(71) Applicant: LG Energy Solution, Ltd., Seoul 07335 (KR)
(72) Inventor: BOK, Cheon Hee, Daejeon Daejeon 34122 (KR); WI, Yeon Hwa, Daejeon Daejeon 34122 (KR); SUNG, Joo Hwan, Daejeon Daejeon 34122 (KR)
(74) Representative: Goddar, Heinz J.
(86) International application number: PCT/KR2025/011209
(87) International publication number: WO 2026/029523

(57) **Abstract**

The present disclosure relates to a secondary battery and a method of the same. A current collector according to the present disclosure includes a body portion and a receiving portion formed at a bending-directional end of the body portion. Certain portions of some foil tabs are received in the receiving portion and welded to the current collector. The certain portions of the foil tabs are melted and integrated with a portion of the body portion and at least a portion of the receiving portion by welding. The present disclosure may prevent an electrode assembly positioned under a void region from being affected during a welding process. Accordingly, damage to a separator of the electrode assembly during the welding process is prevented.

## Description

### Technical Field

The present disclosure relates to a secondary battery and a method of manufacturing the same, and more particularly, to a secondary battery and a method of manufacturing the same in which, during welding of foil tabs and a current collector, certain portions of some of the foil tabs are welded in a state of being received in a receiving portion of the current collector.

### Background Art

Recently, as the demand for portable electronic devices has rapidly increased and the development of electric vehicles, energy storage batteries, robots, satellites, and the like has become more active, intensive research has been conducted on high-performance secondary batteries capable of repeated charging and discharging.

Secondary batteries may be classified, according to the shape of a battery casing, into a can-type secondary battery, in which an electrode assembly is embedded in a metal can, and a pouch-type secondary battery, in which an electrode assembly is embedded in a pouch formed of an aluminum laminate sheet. The can-type secondary battery may also be classified into a cylindrical secondary battery and a prismatic secondary battery according to the shape of the metal can.

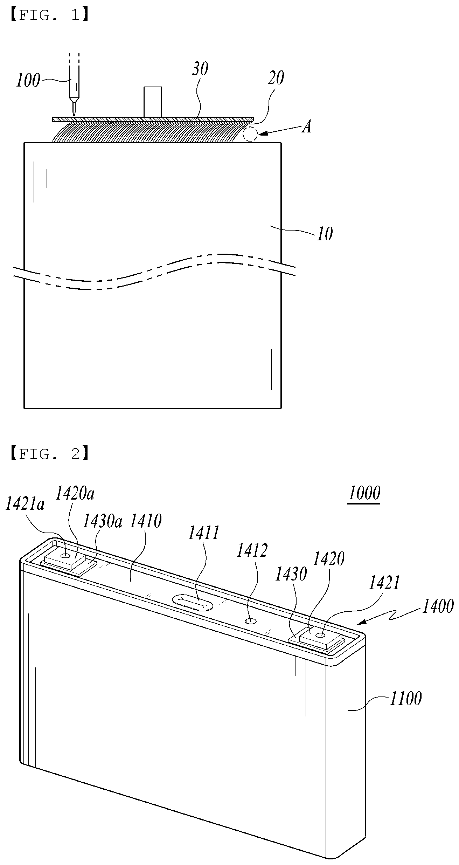

In a secondary battery, foil tabs of an electrode assembly and a current collector are coupled to each other by welding. FIG. 1 is a view illustrating welding in a state in which foil tabs are bent in a bending direction during welding of the foil tabs and the current collector. Referring to FIG. 1, when foil tabs 20 and a current collector 30 are welded, the foil tabs 20 are bent in a bending direction to increase a contact area between the foil tabs 20 and the current collector 30, and the current collector 30 is seated on an upper side of the foil tabs 20 and welded thereto. In this case, because the current collector 30 comes into contact with an upper portion of one surface of each of the foil tabs 20, rather than with an upper end of the foil tab 20, reliable welding may be achieved. A laser or ultrasonic welding apparatus 100 is used for welding.

However, when the foil tabs 20 are bent in the bending direction, a void region A is formed between the foil tab 20 positioned at an outer side in the bending direction and an electrode assembly 10. Because the number of overlapping foil tabs 20 in the void region A is smaller than that in other regions, a welded layer of the foil tabs 20 in the void region A becomes thinner than in other regions. Therefore, when welding is performed above the void region A, heat generated during the welding process may be transferred to the electrode assembly 10, and as a result, a problem may arise that a separator or the like of the electrode assembly 10 below the void region A may be melted.

### DISCLOSURE

### Technical Problem

The present disclosure is directed to providing a secondary battery and a method of manufacturing the same, which may prevent an electrode assembly from being damaged during welding of foil tabs and a current collector.

### Technical Solution

A secondary battery according to an embodiment of the present disclosure may include: an electrode assembly including an electrode portion, and a plurality of foil tabs formed on an end of the electrode portion; and a current collector including a body portion welded to the plurality of foil tabs from an upper side of the foil tabs bent in a bending direction, and a receiving portion formed at an end of the body portion in the bending direction and formed to receive a certain portion of at least one foil tab of the plurality of foil tabs. The certain portion of the at least one foil tab may be received in the receiving portion and welded to the current collector.

In the secondary battery according to an embodiment of the present disclosure, the certain portion of the at least one foil tab may be melted and integrated with a portion of the body portion and at least a portion of the receiving portion by welding.

In the secondary battery according to an embodiment of the present disclosure, the receiving portion may be formed by bending a bending-directional end of the body portion.

In the secondary battery according to an embodiment of the present disclosure, the receiving portion may be bent at an angle maintained constant in a direction opposite to the bending direction.

In the secondary battery according to an embodiment of the present disclosure, the receiving portion may include a first bent portion bent at a first angle, and a second bent portion bent in a direction opposite to the bending direction.

In the secondary battery according to an embodiment of the present disclosure, the receiving portion may be positioned in a void region formed between the foil tab located at an outermost side in the bending direction and the electrode portion when the foil tabs are bent in the bending direction.

In the secondary battery according to an embodiment of the present disclosure, the void region may be sectioned into N regions depending on the number of foil tabs positioned under the body portion. A thickness of the receiving portion in the void region may be uniform in an identical region and varies among different regions.

In the secondary battery according to an embodiment of the present disclosure, the thickness of the receiving portion may increase as the number of foil tabs positioned under the body portion is reduced.

In the secondary battery according to an embodiment of the present disclosure, the at least one foil tab received in the receiving portion may include two to seven foil tabs located at an outer side in the bending direction.

In the secondary battery according to an embodiment of the present disclosure, the certain portion may range from a position between 1/5 and 2/3 of a height of the corresponding foil tab based on the electrode portion to an upper end of the foil tab.

In the secondary battery according to an embodiment of the present disclosure, a length of the certain portion may vary depending on a bending angle at which the corresponding foil tab is bent in the bending direction.

In the secondary battery according to an embodiment of the present disclosure, a thickness of the receiving portion may be reduced toward an end thereof.

In the secondary battery according to an embodiment of the present disclosure, the current collector may further include a supplement portion formed at an end thereof opposite to the bending direction and positioned between the bent foil tabs and the body portion.

A method of manufacturing the secondary battery according to an embodiment of the present disclosure may include a preparation operation of preparing an electrode assembly including an electrode portion and a plurality of foil tabs formed on an end of the electrode portion, a bending operation of bending the plurality of foil tabs in a bending direction, a seating operation of seating a current collector on an upper side of the bent foil tabs, the current collector including a body portion and a receiving portion formed on an end of the body portion in the bending direction, and receiving a certain portion of at least one foil tab of the plurality of foil tabs in the receiving portion, and a welding operation of welding the foil tabs and the current collector to each other while the certain portion of the at least one foil tab is received in the receiving portion.

In the method according to an embodiment of the present disclosure, in the welding operation, the certain portion of the at least one foil tab may be melted and integrated with a portion of the body portion and at least a portion of the receiving portion.

In the method according to an embodiment of the present disclosure, in the welding operation, the welding may be performed on an upper side of the body portion.

In the method according to an embodiment of the present disclosure, in the seating operation, a length of a portion of the foil tabs that is received in the receiving portion may vary depending on a bending angle at which the foil tab is bent in the bending direction.

In the method according to an embodiment of the present disclosure, in the seating operation, the receiving portion may be positioned in a void region formed between the foil tab located at an outermost side in the bending direction and the electrode portion.

In the method according to an embodiment of the present disclosure, in the welding operation, an output of a welding apparatus may be adjusted according to a thickness of the receiving portion when the welding is performed above the void region.

In the method according to an embodiment of the present disclosure, the receiving portion may be formed by bending a bending-directional end of the body portion.

### Advantageous Effects

In a secondary battery and a method of manufacturing the same according to an embodiment of the present disclosure, a receiving portion of a current collector is positioned in a void region, so that the current collector and foil tabs may be welded in a state in which certain portions of some of the foil tabs are received in the receiving portion. Therefore, damage to an electrode assembly during the welding process may be prevented.

### Brief Description of Drawings

FIG. 1 is a view illustrating welding in a state in which foil tabs are bent in a bending direction during welding of the foil tabs and a current collector.
FIG. 2 is a view illustrating a secondary battery according to an embodiment of the present disclosure.
FIG. 3 is an exploded view of the secondary battery according to an embodiment of the present disclosure.
FIG. 4 is a view illustrating a state in which a current collector and foil tabs are welded in the secondary battery according to an embodiment of the present disclosure.
FIG. 5 is a view illustrating the current collector in the secondary battery according to an embodiment of the present disclosure.
FIG. 6 is a view illustrating foil tabs received in a receiving portion of the current collector during welding, in the secondary battery according to an embodiment of the present disclosure.
FIG. 7 is a view illustrating a concept of a bending angle at which a foil tab is bent in a bending direction.
FIG. 8 is a view illustrating a range of a certain portion in the foil tab according to an embodiment of the present disclosure.
FIG. 9 is a conceptual view illustrating the case where a void region is sectioned into N regions and a thickness of the receiving portion varies in a stepwise manner in respective regions according to another embodiment of the present disclosure.
FIG. 10 is a conceptual view illustrating the case where a thickness of the receiving portion gradually varies according to still another embodiment of the present disclosure.
FIGS. 11a to 11e are views illustrating various modifications of the receiving portion according to an embodiment of the present disclosure.
FIG. 12 is a conceptual view illustrating the case where a current collector having a supplement portion is welded to the foil tabs according to an embodiment of the present disclosure.
FIG. 13 is a flowchart illustrating a method of manufacturing the secondary battery according to an embodiment of the present disclosure.

### Best Mode

Since the present disclosure may be modified in various forms, and may have various embodiments, particular embodiments will be illustrated in the accompanying drawings and described in detail with reference to the drawings. However, this is not intended to limit the present disclosure to particular modes of practice, and it is to be appreciated that all changes, equivalents, and substitutes that do not depart from the spirit and technical scope of the present disclosure are encompassed in the present disclosure.

The terminology used herein is for the purpose of describing particular embodiments only and is not intended to be limiting the present disclosure. In the present disclosure, the singular forms are intended to include the plural forms as well, unless the context clearly indicates otherwise. It will be further understood that the terms "include", "have", etc. when used in this specification, are intended to specify the presence of stated features, integers, steps, operations, elements, components, and/or combinations of them but do not preclude the presence or addition of one or more other features, integers, steps, operations, elements, components, and/or combinations thereof.

Hereinafter, exemplary embodiments of the present disclosure will be described in detail with reference to the accompanying drawings. It should be noted that like reference numerals refer to like elements throughout the attached drawings. Details of well-known configurations and functions may be omitted to avoid unnecessarily obscuring the gist of the present disclosure. For the same reason, in the accompanying drawings, some elements are enlarged, omitted, or depicted schematically.

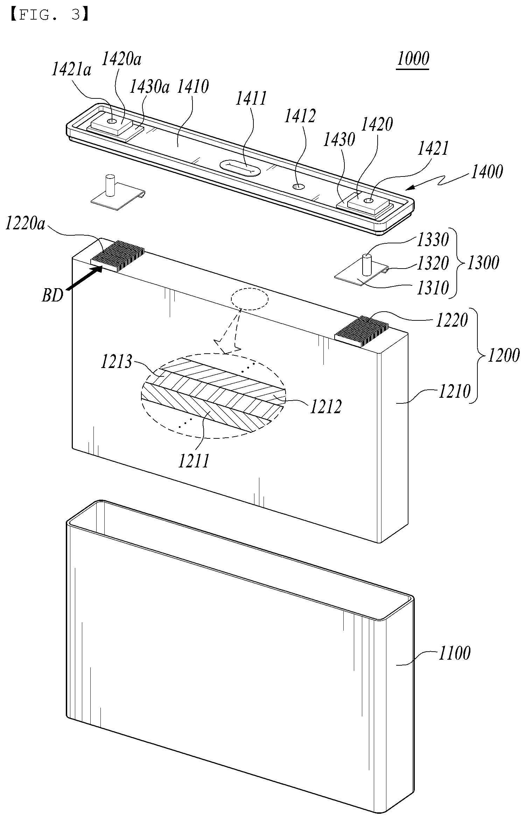

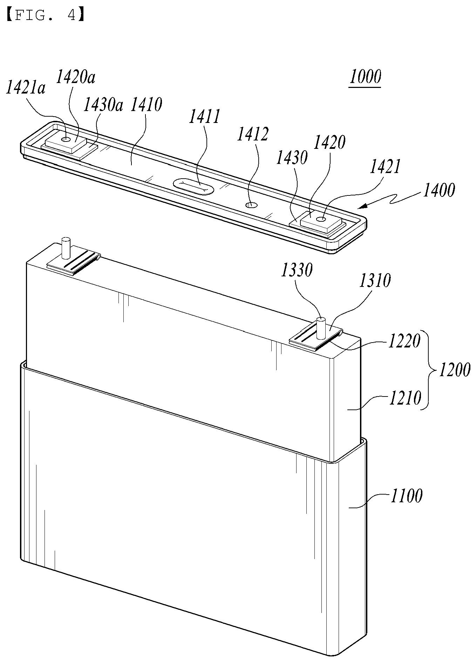

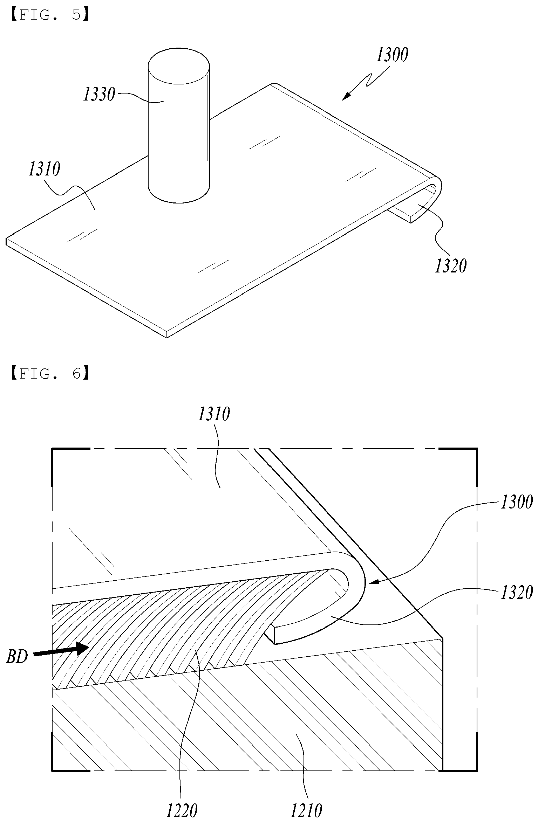

FIG. 2 is a view illustrating a secondary battery according to an embodiment of the present disclosure. FIG. 3 is an exploded view of the secondary battery according to an embodiment of the present disclosure. FIG. 4 is a view illustrating a state in which a current collector and foil tabs are welded in the secondary battery according to an embodiment of the present disclosure. FIG. 5 is a view illustrating the current collector in the secondary battery according to an embodiment of the present disclosure.

As illustrated in FIGS. 2 to 5, a secondary battery 1000 according to an embodiment of the present disclosure includes a casing 1100, an electrode assembly 1200, current collectors 1300, and a cap assembly 1400.

The casing 1100 forms an outer shape of the secondary battery 1000. The casing 1100 may define a space capable of accommodating the electrode assembly 1200 therein, and may have an opening on one surface thereof. In the present embodiment, the casing 1100 has a rectangular parallelepiped shape, but is not limited thereto and may be modified in various ways. The casing 1100 may be made of a rigid material capable of protecting the electrode assembly 1200 accommodated therein. For example, the casing 1100 may be made of metal such as aluminum or stainless steel.

Electrolyte may be received together with the electrode assembly 1200 in the casing 1100. The electrolyte may include a lithium salt such as LiPF₆ or LiBF₄ in an organic solvent such as ethylene carbonate (EC), propylene carbonate (PC), diethyl carbonate (DEC), ethyl methyl carbonate (EMC), or dimethyl carbonate (DMC). The electrolyte may be in a liquid, solid, or gel phase.

The electrode assembly 1200 is accommodated in the casing 1100. The electrode assembly 1200 includes an electrode portion 1210 and a plurality of foil tabs 1220 and 1220a.

The electrode portion 1210 includes a plurality of unit electrode plates 1211 and 1212 and separators 1213. An active material may be applied to the unit electrode plates 1211 and 1212. The plurality of unit electrode plates 1211 and 1212 may include first unit electrode plates 1211 each of which is formed by applying an active material such as a transition metal oxide to a metal plate such as aluminum, and second unit electrode plates 1212 each of which is formed by applying an active material such as graphite or carbon to a metal plate such as copper or nickel.

The separators 1213 are positioned between the plurality of unit electrode plates 1211 and 1212 to prevent a short circuit between the unit electrode plates 1211 and 1212. The separators 1213 may be made of polyethylene, polypropylene, a composite material thereof, or the like.

The electrode portion 1210 may be formed by positioning the separators 1213 between the first unit electrode plates 1211 and the second unit electrode plates 1212, which are alternately arranged. In other words, in an embodiment, the electrode portion 1210 may be formed by alternately stacking the first unit electrode plate 1211, the separator 1213, the second unit electrode plate 1212, and the separator 1213 in the listed order. In another embodiment, the electrode portion 1210 may be formed by arranging the first unit electrode plate 1211, the separator 1213, and the second unit electrode plate 1212 in the listed order and then winding the arranged structure.

Although, in the present embodiment, the electrode assembly 1200 is illustrated as including the single electrode portion 1210, in another embodiment, the electrode assembly 1200 may include a plurality of electrode portions 1210. The plurality of electrode portions 1210 may be electrically connected to one another.

The foil tabs 1220 and 1220a, to which no active material is applied, are respectively formed at one end of the plurality of unit electrode plates 1211 and 1212. In an embodiment, each of the unit electrode plates 1211 and 1212 and the foil tab 1220 or 1220a may be integrally formed by cutting a predetermined portion of a single metal plate using a laser or the like, such that the unit electrode plate 1211 or 1212 and the foil tab 1220 or 1220a remain. The foil tabs 1220 and 1220a may be formed in a direction away from the electrode portion 1210. In the present embodiment, the foil tabs 1220 and 1220a may be formed in a direction toward the cap assembly 1400.

The foil tabs 1220 of the first unit electrode plates 1211 overlap each other at a first position. The foil tabs 1220a of the second unit electrode plates 1212 overlap each other at a second position. In another embodiment, a position at which the foil tabs 1220 or 1220a of each of the first unit electrode plates 1211 and the second unit electrode plates 1212 overlap each other may be two or more. The plurality of foil tabs 1220 or 1220a that overlap each other at the same position may be joined to each other by ultrasonic welding, laser welding, or the like to facilitate movement of current.

The current collectors 1300 electrically connect the foil tabs 1220 and 1220a to terminals 1420 and 1420a of the cap assembly 1400, respectively. Referring to FIG. 5, each of the current collectors 1300 includes a body portion 1310 and a receiving portion 1320. In the present embodiment, the body portion 1310 has a plate shape, but is not limited thereto.

The body portion 1310 of each of the current collectors 1300 is welded at a lower surface thereof to the foil tabs 1220 or 1220a from above the foil tabs 1220 or 1220a. A method such as ultrasonic welding, laser welding, or the like may be used for the welding. In order to increase a contact area between the foil tabs 1220 or 1220a and the body portion 1310 during welding of the foil tabs 1220 or 1220a and the body portion 1310 and thereby enable reliable welding, the foil tabs 1220 or 1220a are bent in a bending direction BD, the body portion 1310 is seated on the upper sides of the foil tabs 1220 or 1220a, and the welding is performed. During the welding, the body portion 1310 may be pressed toward the foil tabs 1220 or 1220a.

In the present embodiment, the foil tabs 1220 joined together and the foil tabs 1220a joined together may be bent in the same bending direction BD. The foil tabs 1220 of the first unit electrode plates 1211 and the foil tabs 1220a of the second unit electrode plates 1212 may be bent in different bending directions BD.

Upper surfaces of the current collectors 1300 are respectively connected to the terminals 1420 and 1420a. For connection with the terminals 1420 and 1420a, each of the current collectors 1300 may include a connection portion 1330. In the present embodiment, the connection portion 1330 has a rod shape, but is not limited thereto. In another embodiment, a portion of each of the current collectors 1300 may be formed to protrude convexly such that the convex portion is connected to the terminal 1420 or 1420a.

The receiving portion 1320 is formed at an end of the current collector 1300. Certain portions of some of the corresponding foil tabs 1220 or 1220a are received in the receiving portion 1320. Received in the receiving portion 1320, the certain portions of the foil tabs 1220 or 1220a are welded to the current collector 1300.

The cap assembly 1400 seals the opening of the casing 1100 in which the electrode assembly 1200 is accommodated. The cap assembly 1400 includes a cap plate 1410 and the terminals 1420 and 1420a.

The cap plate 1410 may have a plate shape that covers the opening of the casing 1100. The cap plate 1410 may have a shape corresponding to that of the opening of the casing 1100. The cap plate 1410 may be formed of the same material as the casing 1100, and may be fixed to the casing 1100 by a method such as laser welding.

The cap plate 1410 may be formed with an electrolyte injection hole 1411 and a vent hole 1412. Electrolyte can be injected into the casing 1100 through the electrolyte injection hole 1411. The vent hole 1412 opens when an internal pressure of the casing 1100 exceeds a reference value. In the present embodiment, the vent hole 1412 is formed in the cap plate 1410, but in other embodiments, the vent hole 1412 may be formed in the casing 1100.

The terminals 1420 and 1420a may be formed to protrude from the cap plate 1410. The terminals 1420 and 1420a are respectively electrically connected to the foil tabs 1220 and 1220a through the current collectors 1300. The terminals 1420 and 1420a may each have a circular or rectangular plate shape.

Terminal holes 1421 and 1421a may be respectively formed in the terminals 1420 and 1420a. The connection portions 1330 are respectively inserted into the terminal holes 1421 and 1421a.

Insulators 1430 and 1430a may be respectively positioned between the terminals 1420 and 1420a and the cap plate 1410. The insulators 1430 and 1430a electrically insulate the terminals 1420 and 1420a and the cap plate 1410 from each other.

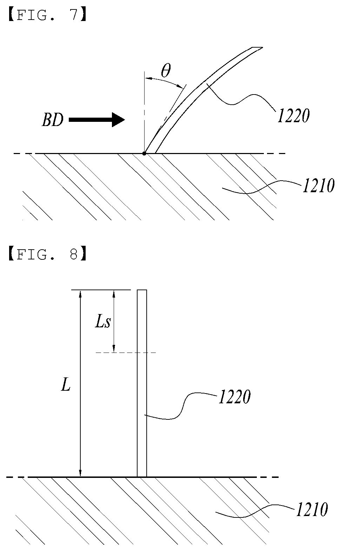

FIG. 6 is a view illustrating foil tabs received in the receiving portion of the current collector during welding, in the secondary battery according to an embodiment of the present disclosure. FIG. 7 is a view illustrating a concept of a bending angle at which a foil tab is bent in the bending direction. FIG. 8 is a view illustrating a range of the certain portion in the foil tab according to an embodiment of the present disclosure.

Referring to FIGS. 6 to 8, in the current collector 1300 according to an embodiment of the present disclosure, the receiving portion 1320 is formed at an end of the body portion 1310 in the bending direction BD. The receiving portion 1320 is positioned in a void region formed between the foil tab 1220 located at an outer side in the bending direction BD and the electrode portion 1210 when the foil tabs 1220 are bent in the bending direction BD.

In the receiving portion 1320, certain portions of some foil tabs 1220 located at the outer side in the bending direction BD among the plurality of foil tabs 1220 are received. In the present embodiment, three foil tabs 1220 are received in the receiving portion 1320, but the number of foil tabs 1220 received in the receiving portion 1320 may vary depending on a bending angle θ at which the foil tabs 1220 are bent in the bending direction BD. Referring to FIG. 7, the bending angle θ is an angle formed between the foil tabs 1220 and a plane perpendicular to the upper surface of the electrode portion 1210 when the foil tabs 1220 are bent in the bending direction BD. As the bending angle θ increases, the number of foil tabs 1220 received in the receiving portion 1320 increases, and as the bending angle θ decreases, the number of foil tabs 1220 decreases.

When the bending angle θ is relatively small, there is a problem in that an area of the foil tabs 1220 in contact with the current collector 1300 is reduced. When the bending angle θ is excessively large, there is a problem in that the current collector 1300 and the electrode assembly 1200 become excessively close to each other, so that welding heat may be transferred to the electrode assembly 1200. Accordingly, it is preferable that the bending angle θ be set such that the number of foil tabs 1220 received in the receiving portion 1320 ranges from two to seven.

As referred to in FIG. 8, a certain portion of each foil tab 1220 received in the receiving portion 1320 is an upper end portion of the foil tab 1220. Here, the upper end means a distal end of the foil tab 1220 in a direction in which the foil tab 1220 is not connected to the electrode portion 1210. In the present embodiment, the certain portion of the foil tab 1220 received in the receiving portion 1320 may range from a position between 1/5 and 2/3 of a height of the foil tab 1220 from the electrode portion 1210 in a height direction of the foil tab 1220 to the upper end of the foil tab 1220. That is, a relationship between a length Ls of the certain portion and an overall length L of the foil tab 1220 is L/3 ≤ Ls ≤ 4L/5. When the relationship is satisfied, the certain portion of the foil tab 1220 may be stably received in the receiving portion 1320.

The certain portion of the foil tab 1220 received in the receiving portion 1320 varies depending on the bending angle θ at which the foil tab 1220 is bent in the bending direction BD. As the bending angle θ increases, a length of the foil tab 1220 received is increased. As the bending angle θ decreases, the length of the foil tab 1220 is reduced. In addition, the farther outward the foil tab 1220 is positioned in the bending direction BD, the longer the length of the certain portion becomes.

In a state in which the certain portion of the foil tab 1220 is received in the receiving portion 1320, the foil tab 1220 and the current collector 1300 are welded to each other. The welding is performed along the bending direction BD from an upper side of the current collector 1300 using a welding apparatus. In this case, because the receiving portion 1320 fills the void region, even when an output of the welding apparatus is maintained constant, over-welding does not occur. Accordingly, there is no problem in that a separator of the electrode portion 1210 or the like is melted below the void region. The certain portion of the foil tab 1220 is melted and integrated with a portion of the body portion 1310 and at least a portion of the receiving portion 1320 by welding.

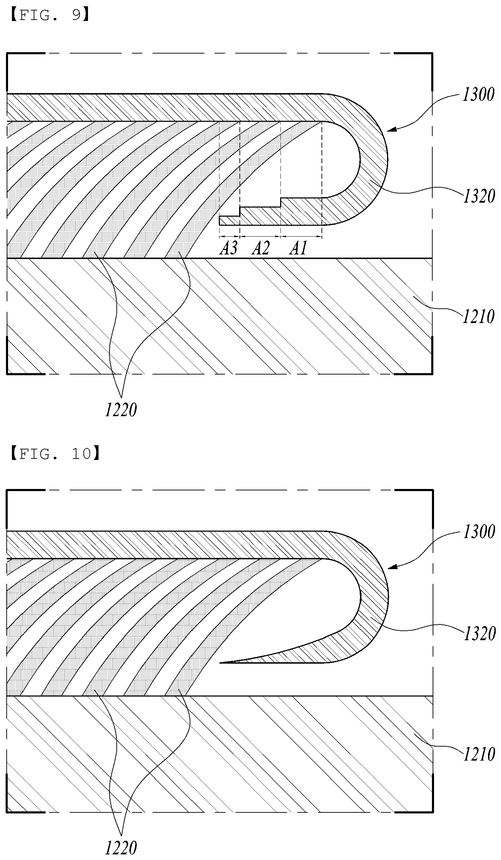

FIG. 9 is a conceptual view illustrating the case where a void region is sectioned into N regions and a thickness of the receiving portion varies in a stepwise manner in the respective regions according to another embodiment of the present disclosure. FIG. 10 is a conceptual view illustrating the case where a thickness of the receiving portion gradually varies according to still another embodiment of the present disclosure.

Referring to FIG. 9, the void region may be sectioned into N regions depending on the number of foil tabs 1220 positioned under the body portion 1310. In the present embodiment, the void region is sectioned into three regions A1, A2, and A3, but in other embodiments, the void region may be sectioned into two regions or four or more regions.

In the region A1, one foil tab 1220 is positioned under the body portion 1310. In the region A2, two foil tabs 1220 are positioned under the body portion 1310. In the region A3, three foil tabs 1220 are positioned under the body portion 1310. Accordingly, a thickness of the overlapped foil tabs 1220 in the region A2 is twice that in the region A1, and a thickness of the overlapped foil tabs 1220 in the region A3 is three times that in the region A1. In this case, if welding in the region A1 is performed after setting the output of the welding apparatus such that over-welding does not occur, under-welding may occur not only in the regions A2 and A3 but also in portions of the foil tabs 1220 where no void region is formed. Therefore, there is a need to set the output of the welding apparatus such that proper welding can be performed in portions of the foil tabs 1220 where no void region is formed, and to adjust a thickness of the receiving portion 1320 so that over-welding does not occur in the void region. In addition, it is also necessary to vary the thickness of the receiving portion 1320 according to each region of the void region.

In the present embodiment, the thickness of the receiving portion 1320 is increased in order of the regions A1, A2, and A3. However, in each region, the thickness of the receiving portion 1320 is maintained constant. That is, the thickness of the receiving portion 1320 varies in a stepwise manner. Accordingly, it is possible to prevent over-welding from occurring in some regions of the void region.

In another embodiment of the present disclosure, referring to FIG. 10, an end of the receiving portion 1320 of the current collector 1300 faces in a direction opposite to the bending direction. Because the void region becomes smaller toward the direction opposite to the bending direction, the thickness of the receiving portion 1320 of the current collector 1300 may gradually decrease toward the end. The foregoing structure also makes it possible to prevent over-welding from occurring in some regions of the void region. The receiving portion 1320 having a gradual variation in thickness can be more easily fabricated than the receiving portion 1320 having a stepped variation in thickness.

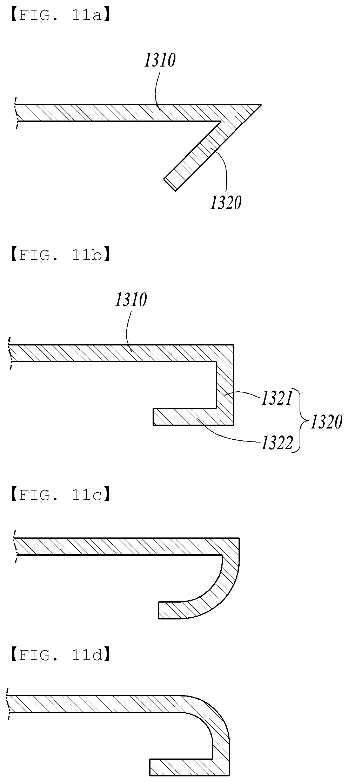

FIGS. 11a to 11e are views illustrating various modifications of the receiving portion according to an embodiment of the present disclosure.

The receiving portion 1320 according to an embodiment of the present disclosure may be formed by bending a bending-directional end of the body portion 1320. The foregoing structure provides an advantage in that the body portion 1310 and the receiving portion 1320 can be simply and rapidly fabricated by bending a single plate. Various types of the receiving portion 1320 may be formed depending on the number of bendings and a bending angle.

FIG. 11a illustrates the receiving portion 1320 bent at an angle maintained constant in a direction opposite to the bending direction. Such a shape may be formed by a single bending, and may facilitate the fabricating process.

As shown in FIG. 11b, the receiving portion 1320 may include a first bent portion 1321 bent at a first angle and a second bent portion 1322 bent in a direction opposite to the bending direction. The receiving portion 1320 having a double-bent structure may be shaped to stably receive the foil tabs.

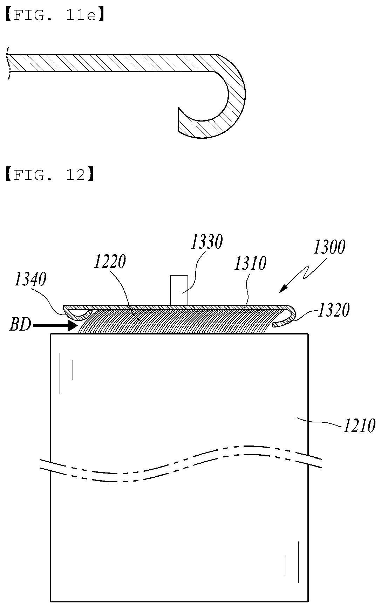

FIGS. 11c and 11d each illustrate a shape of the receiving portion 1320 shown in FIG. 11b, in which a specific corner portion is rounded. FIG. 11e illustrates the receiving portion 1320 bent to have a semicircular shape.

In the present disclosure, the shape of the receiving portion 1320 is not limited to those shown in FIGS. 11a to 11e, and various shapes are possible that can receive the certain portions of the foil tabs and can be at least partially positioned in the void region.

FIG. 12 is a conceptual view illustrating the case where a current collector having a supplement portion is welded to the foil tabs according to an embodiment of the present disclosure.

Referring to FIG. 12, the current collector 1300 according to an embodiment of the present disclosure may include a supplement portion 1340 formed at an end of the body portion 1310 in a direction opposite to the bending direction BD. That is, the supplement portion 1340 is positioned to be opposed to the receiving portion 1320 with respect to the body portion 1310.

The supplement portion 1340 is positioned above the foil tab 1220 located at an outer side opposite to the bending direction BD under the body portion 1310 when the foil tabs 1220 are bent in the bending direction BD. Accordingly, the supplement portion 1340 fills a space formed between the body portion 1310 and the foil tabs 1220 as the foil tabs 1220 are bent in the bending direction BD. Therefore, in the case where the foil tab 1220 and the current collector 1300 are welded to each other in this state, over-welding may be prevented from occurring even when the output of a welding apparatus is maintained constant.

The supplement portion 1340 may be formed in various shapes. For example, the supplement portion 1340 may have a shape formed by bending the end of the body portion 1310 in the same manner as the receiving portion 1320. In another embodiment, the supplement portion 1340 may have a protrusion shape protruding downward from the body portion 1310.

The size of the supplement portion 1340 may vary depending on a gap between the body portion 1310 and the bent foil tabs 1220. In addition, the supplement portion 1340 may be reduced in height with respect to a lower surface of the body portion 1310 toward the bending direction BD.

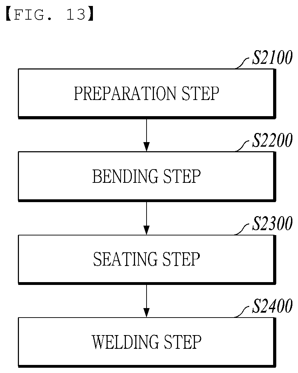

FIG. 13 is a flowchart illustrating a method of manufacturing the secondary battery according to an embodiment of the present disclosure.

Referring to FIG. 13, a method of manufacturing the secondary battery according to an embodiment of the present disclosure includes a preparation step S2100, a bending step S2200, a seating step S2300, and a welding step S2400.

In the preparation step S2100, the electrode assembly is prepared. The electrode assembly includes the electrode portion and the plurality of foil tabs formed on one end of the electrode portion. The electrode portion includes the plurality of unit electrode plates coated with an active material and the separators configured to prevent short-circuiting between the plurality of unit electrode plates. The foil tabs are formed at one end of the plurality of unit electrode plates, and no active material is applied to the foil tabs.

The electrode portion may be formed by positioning the separators between unit electrode plates alternately arranged. In an embodiment, the electrode portion is formed by alternately stacking the unit electrode plates and the separators in an order of the unit electrode plate, the separator, and the unit electrode plate. In another embodiment, the electrode portion may be formed by arranging the unit electrode plate, the separator, and the unit electrode plate in the listed order and then winding the arranged structure.

In the bending step S2200, the plurality of foil tabs are bent in the bending direction BD. Accordingly, the foil tabs and the body portion of the current collector may be brought into contact with each other over a relatively large area during welding, thereby enabling reliable welding. In the present embodiment, the foil tabs 1220 joined together and the foil tabs 1220a joined together may be bent in the same bending direction BD, and the foil tabs 1220 of the first unit electrode plates 1211 and the foil tabs 1220a of the second unit electrode plates 1212 may be bent in different bending directions BD.

In the seating step S2300, the current collector is seated on an upper side of the bent foil tabs. The current collector includes the body portion and the receiving portion formed at one end of the body portion. The certain portions of some of the plurality of foil tabs are received in the receiving portion. The receiving portion may be formed in various shapes by bending the end of the body portion in the bending direction BD.

The foil tabs received in the receiving portion may be two to seven foil tabs among the foil tabs located at an outer side in the bending direction BD. The certain portion may range from a position between 1/5 and 2/3 of the height of the foil tab based on the electrode portion to the upper end of the foil tab. The length of the certain portion may vary depending on a bending angle at which the foil tab is bent in the bending direction BD.

In the welding step S2400, the foil tabs and the current collector are welded. The welding is performed using a welding apparatus. In the present disclosure, a method such as laser welding or ultrasonic welding may be used. In the case where the welding is performed, at least a portion of the receiving portion may be melted together with the certain portions of the corresponding foil tabs to form an integrated structure. The welding may be performed from an upper side of the body portion.

In an embodiment, in the welding step S2400, the output of the welding apparatus may be adjusted according to the thickness of the receiving portion when welding is performed above the void region. In the void region, the thickness of the overlapped foil tabs is smaller than that in other regions. Accordingly, if welding is performed with the same output as in other regions, over-welding may occur, and a problem may occur in that the separator of the electrode portion or the like is melted below the void region. To prevent the foregoing problem, a method of welding with a reduced output of the welding apparatus in the void region may be considered.

In the present disclosure, the receiving portion is positioned in the void region so that a thickness difference of the overlapped foil tabs between the void region and other regions can be compensated for. In this case, if the thickness difference of the overlapped foil tabs between the void region and the other regions is removed by the receiving portion, when welding is performed even in the void region by operating the welding apparatus with the same output as in the other regions, a problem of over-welding does not occur.

In another embodiment, referring to FIG. 9, even in the void region, the thickness of the overlapped foil tabs varies depending on the number of foil tabs positioned under the body portion. In this case, if the thickness of the receiving portion is constant, the output of the welding apparatus needs to be varied for each region when welding is performed in the void region due to the thickness difference of the overlapped foil tabs.

In the case where the thickness of the receiving portion is varied in consideration of the thickness difference of the overlapped foil tabs in the void region so that the sum of the thickness of the overlapped foil tabs and the thickness of the receiving portion is constant, the output of the welding apparatus may be maintained constant during welding in the void region.

While the present disclosure has been described with respect to the specific embodiments, it will be apparent to those skilled in the art that various changes or modifications of the present disclosure are possible by adding, changing, or deleting components without departing from the spirit of the present disclosure as defined in the following claims. It should be noted that these changes or modifications also fall within the scope of the present disclosure.

## Claims

1. A secondary battery comprising:
an electrode assembly including an electrode portion, and a plurality of foil tabs formed on an end of the electrode portion; and
a current collector including a body portion welded to the plurality of foil tabs from an upper side of the foil tabs bent in a bending direction, and a receiving portion formed at an end of the body portion in the bending direction and formed to receive a certain portion of at least one foil tab of the plurality of foil tabs,
wherein the certain portion of the at least one foil tab is received in the receiving portion and welded to the current collector.

2. The secondary battery of claim 1, wherein the certain portion of the at least one foil tab is melted and integrated with a portion of the body portion and at least a portion of the receiving portion by welding.

3. The secondary battery of claim 1, wherein the receiving portion is formed by bending a bending-directional end of the body portion.

4. The secondary battery of claim 3, wherein the receiving portion is bent at an angle maintained constant in a direction opposite to the bending direction.

5. The secondary battery of claim 3, wherein the receiving portion comprises a first bent portion bent at a first angle, and a second bent portion bent in a direction opposite to the bending direction.

6. The secondary battery of claim 1, wherein the receiving portion is positioned in a void region formed between the foil tab located at an outermost side in the bending direction and the electrode portion when the foil tabs are bent in the bending direction.

7. The secondary battery of claim 6,
wherein the void region is sectioned into N regions depending on a number of foil tabs positioned under the body portion, and
wherein a thickness of the receiving portion in the void region is uniform in an identical region and varies among different regions.

8. The secondary battery of claim 7, wherein the thickness of the receiving portion increases as the number of foil tabs positioned under the body portion is reduced.

9. The secondary battery of claim 1, wherein the at least one foil tab received in the receiving portion comprises two to seven foil tabs located at an outer side in the bending direction.

10. The secondary battery of claim 1, wherein the certain portion ranges from a position between 1/5 and 2/3 of a height of the corresponding foil tab based on the electrode portion to an upper end of the foil tab.

11. The secondary battery of claim 1, wherein a length of the certain portion varies depending on a bending angle at which the corresponding foil tab is bent in the bending direction.

12. The secondary battery of claim 1, wherein a thickness of the receiving portion is reduced toward an end thereof.

13. The secondary battery of claim 1, wherein the current collector further comprises a supplement portion formed at an end thereof opposite to the bending direction and positioned between the bent foil tabs and the body portion.

14. A method of manufacturing the secondary battery, comprising:
a preparation operation of preparing an electrode assembly including an electrode portion and a plurality of foil tabs formed on an end of the electrode portion;
a bending operation of bending the plurality of foil tabs in a bending direction;
a seating operation of seating a current collector on an upper side of the bent foil tabs, the current collector including a body portion and a receiving portion formed on an end of the body portion in the bending direction, and receiving a certain portion of at least one foil tab of the plurality of foil tabs in the receiving portion; and
a welding operation of welding the foil tabs and the current collector to each other while the certain portion of the at least one foil tab is received in the receiving portion.

15. The method of manufacturing the secondary battery of claim 14, wherein in the welding operation, the certain portion of the at least one foil tab is melted and integrated with a portion of the body portion and at least a portion of the receiving portion.

16. The method of manufacturing the secondary battery of claim 14, wherein in the welding operation, the welding is performed on an upper side of the body portion.

17. The method of manufacturing the secondary battery of claim 14, wherein in the seating operation, a length of a portion of the foil tab that is received in the receiving portion varies depending on a bending angle at which the foil tab is bent in the bending direction.

18. The method of manufacturing the secondary battery of claim 14, wherein in the seating operation, the receiving portion is positioned in a void region formed between the foil tab located at an outermost side in the bending direction and the electrode portion.

19. The method of manufacturing the secondary battery of claim 18, wherein in the welding operation, an output of a welding apparatus is adjusted depending on a thickness of the receiving portion when the welding is performed above the void region.

20. The method of manufacturing the secondary battery of claim 14, wherein the receiving portion is formed by bending a bending-directional end of the body portion.
